# EUROPÄISCHE PATENTSCHRIFT

(11) **EP 1 080 986 B1**
(45) Veröffentlichungstag und Bekanntmachung des Hinweises auf die Patenterteilung: **23.02.2005**
(21) Anmeldenummer: 00116991.1
(22) Anmeldetag: 08.08.2000
(51) Int. Cl.: B60N 2/62

(54) **Sitztiefeneinstellvorrichtung für einen Fahrzeugsitz**
Seat depth adjusting device for a vehicle seat
Dispositif de réglage de la profondeur d'assise pour un siège de véhicule

(30) Priorität: 04.09.1999 DE 19942351
(43) Veröffentlichungstag der Anmeldung: 07.03.2001
(73) Patentinhaber: KEIPER GmbH & Co. KG, 67657 Kaiserslautern (DE)
(72) Erfinder: Westrich, Andreas, 67685 Schwedelbach (DE); Zirkel, Joachim, 67706 Krickenbach (DE); Diemer, Jochen, 67691 Hochspeyer (DE)
(74) Vertreter: Patentanwälte Hosenthien-Held und Dr. Held

(56) Entgegenhaltungen:
- EP-A- 0 581 646
- DE-A- 4 104 440
- DE-C- 19 617 689

## Beschreibung

Die Erfindung betrifft eine Sitztiefeneinstellvorrichtung für einen Fahrzeugsitz, insbesondere für einen Kraftfahrzeugsitz, mit den Merkmalen des Oberbegriffs des Anspruches 1 und einen Fahrzeugsitz mit den Merkmalen des Oberbegriffs des Anspruches 4.

In der DE 196 17 689 C1 ist eine Sitztiefeneinstellvorrichtung ohne gemeinsame Polsteroberfläche beschrieben. Aus der DE 41 04 440 C2 ist eine Sitztiefeneinstellvorrichtung bekannt, bei der als Polster ein einstückig ausgebildetes, flexibles Polsterteil mit einer durchgehenden Polsteroberfläche vorgesehen ist. Dessen Vorderteil liegt auf einem zur Einstellung der Sitztiefe verschiebbaren Auflageteil auf. Je nach gewünschter Sitztiefe wird das Vorderteil des Polsters mehr oder weniger um die Vorderkante des Auflageteils umgebogen, wobei eine Feder für den Wegausgleich und für die nötige Spannung sorgt. Mit dieser Sitztiefeneinstellvorrichtung wird eine sogenannte Krümmelfalte vermieden, die auftritt, wenn getrennte Polsterteile ohne durchgehende Polsteroberfläche vorhanden sind.

In der EP 0 581 646 A1 ist eine Sitztiefeneinstellvorrichtung gemäß dem Oberbegriff des Anspruchs 1 offenbart, bei der das hintere Polsterteil und das relativ zum hinteren Polsterteil drehbare vordere Polsterteil von einem gemeinsamen Bezug überzogen sind.

Der Erfindung liegt die Aufgabe zu Grunde, eine Sitztiefeneinstellvorrichtung der eingangs genannten Art zu verbessern. Diese Aufgabe wird erfindungsgemäß durch eine Sitztiefeneinstellvorrichtung mit den Merkmalen des Anspruches 1 und durch einen Fahrzeugsitz mit den Merkmalen des Anspruches 4 gelöst. Vorteilhafte Ausgestaltungen sind Gegenstand der Unteransprüche.

Durch die getrennte Ausbildung von vorderem Polsterteil und hinterem Polsterteil kann das vordere Polsterteil zur Einstellung der Sitztiefe leichter bewegt werden als ein einstückiges Polster. Es tritt dann im Bereich des vorderen Randes keine Polsterpressung aufgrund der Umlenkung des Polsters auf. Es gibt mehr Spielraum für die Wahl der Stärke der Polsterteile und die Herstellung ist einfacher und kostengünstiger. Eine Krümmelfalte wird durch den gemeinsamen Bezug verhindert, so daß die Vorteile der bekannten Sitztiefeneinstellvorrichtung erhalten bleiben.

Das vordere Polsterteil ist relativ zum hinteren Polsterteil drehbar. Gegenüber Schienenführungen hat dies den Vorteil einer einfachen Herstellung und Montage. Der Antrieb erfolgt über eine Antriebseinheit mit längsverschiebbarer Schubstange, die exzentrisch an dem vorderen Polsterteil angreift, d.h. ungefähr in der Art einer Pleuelstange. In Verbindung mit einem unrunden vorderen Polsterteil entsteht dadurch eine Drehbewegung, bei welcher der vordere Polsterteil unterschiedlich weit nach vorne und wieder zurück bewegt wird. Das bezüglich der Drehachse exzentrische Angreifen des Antriebs hat aufgrund der Hebelarmverhältnisse den Vorteil, daß die Antriebskraft geringer ist als beispielsweise im Falle eines Antriebs über eine mit der Drehachse fluchtende Welle.

Das vordere Polsterteil ist auf einem profilierten Grundträger angeordnet, der einen im wesentlichen dreieckigen Querschnitt aufweist, also einen Querschnitt mit gegebenenfalls abgerundeten Ecken und gegebenenfalls gebogenen Seiten. Dieser Grundträger ist an einer Ecke gelagert, während dann die exzentrisch angreifende Antriebseinheit im Bereich einer weiteren Ecke des Grundträgers angelenkt ist. Die unterschiedlichen Sitztiefen werden dadurch erreicht, daß bei der geringsten bzw. der größten Sitztiefe eine Ecke bzw. eine Seite des Dreiecks nach oben zum Bezug hin zeigt und dazwischen das vordere Polsterteil entsprechend gedreht wird. Das vordere Polsterteil weist dann auf der Oberseite in Abhängigkeit der Stellung des Dreiecks eine unterschiedliche Länge auf. In sämtlichen Stellungen sind die beiden Polsterteile so dicht beieinander, daß die Sitzfläche über ihre gesamte Länge hinweg von Polstermaterial unterstützt ist.

Bei der Bewegung des vorderen Polsterteils ist es von Vorteil, wenn zwischen dem Bezug und dem vorderen Polsterteil ein Materialpaar mit geringer Reibung (beispielsweise Flies/Leder) vorgesehen ist, um die bei der Relativbewegung des vorderen Polsterteils relativ zum Bezug entstehenden Reibungskräfte gering zu halten, um also die von der Antriebseinheit aufzubringende Kraft nicht übermäßig groß dimensionieren zu müssen. Damit der Bezug trotzdem gespannt bleibt und keine unerwünschten Falten wirft und damit der bei einer Vergrößerung der Sitztiefe entstehende Mehrbedarf an Bezug ausgeglichen wird, ist vorzugsweise ein elastisches Ausgleichselement vorgesehen, beispielsweise ein Gummiband oder eine Feder. Bei größeren Einstelltiefen kann vorzugsweise das elastische Ausgleichselement durch eine entsprechende Kinematik, beispielsweise der Befestigungsstelle des Ausgleichselementes, nachgeführt werden.

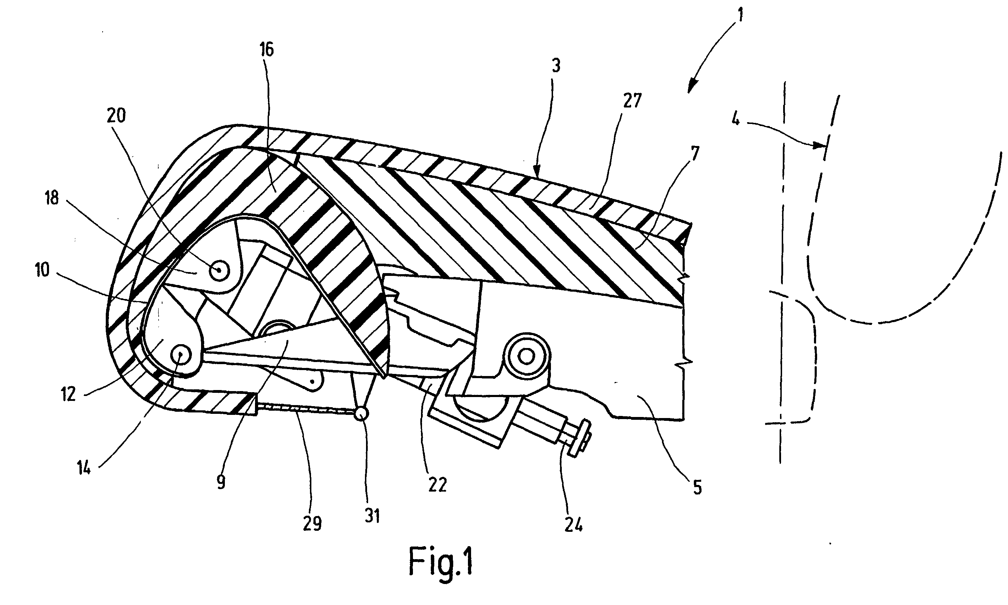

Im folgenden ist die Erfindung anhand eines in der Zeichnung dargestellten Ausführungsbeispiels näher erläutert. Es zeigen
- Fig. 1: eine teilweise geschnitten dargestellte Seitenansicht des Ausführungsbeispiels im Falle der geringsten einstellbaren Sitztiefe, und

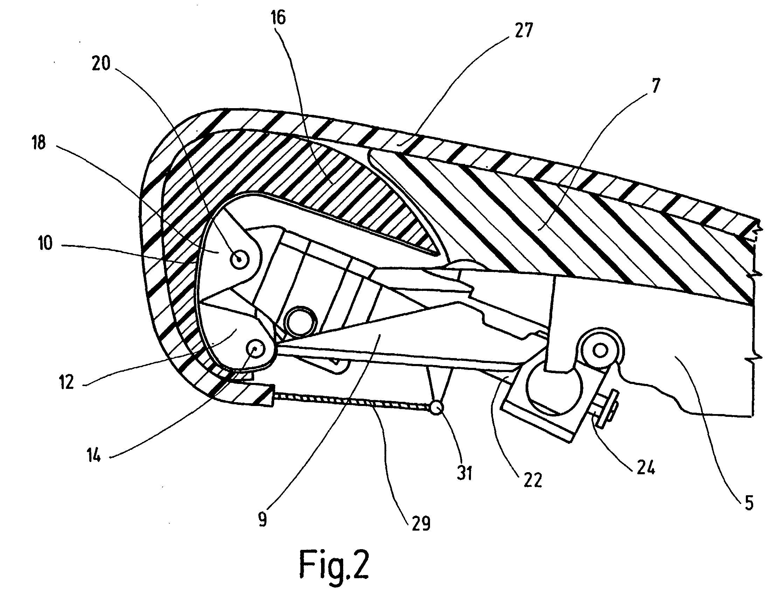

- Fig. 2: eine Darstellung entsprechend Fig. 1 im Falle der größten einstellbaren Sitztiefe.

Ein Fahrzeugsitz 1 eines Kraftfahrzeuges ist mit einem Sitzteil 3 und einer am hinteren Rand des Sitzteils 3 angeordneten Rückenlehne 4 versehen. Die Rückenlehne 4 ist in der Zeichnung nur angedeutet. Das Sitzteil 3 umfaßt eine Sitzschale 5, welche ein als Polster dienendes Sitzkissen 7 trägt. Die Sitztiefe, also der Abstand zwischen dem vorderen Rand des Sitzteils 3 und der Rückenlehne 4, ist mittels einer nachfolgend näher beschriebenen Sitztiefeneinstellvorrichtung einstellbar.

Am vorderen Rand der Sitzschale 5 ist auf der linken und auf der rechten Seite des Fahrzeugsitzes 1 jeweils ein nach vorne abstehender Halter 9 angebracht. Ein profilierter Grundträger 10 weist einen Querschnitt auf, der über die Länge des Grundträgers 10 hinweg im wesentlichen gleich bleibt und die Form eines Dreiecks mit zwei abgerundeten Ecken hat, wobei der aus Kunststoff gefertigte Grundträger 10 nur etwas mehr als zwei Seiten des Dreiecks umschließt. Der Grundträger 10 erstreckt sich quer zum Fahrzeugsitz 1 und weist an seinen beiden Enden im Bereich einer Ecke des Dreiecks je ein Paar paralleler Laschen 12 und einen Lagerbolzen 14 dazwischen auf. Die miteinander fluchtenden, quer zum Fahrzeugsitz 1 ausgerichteten Lagerbolzen 14 sind jeweils durch einen der Halter 9 gesteckt, so daß der Grundträger 10 drehbar gelagert ist.

Auf dem Grundträger 10 ist ein vorderes Polster 16 aus Schaumstoff angebracht, welches gegenüber dem Grundträger 10 einen abgerundeteren Querschnitt aufweist. Am Grundträger 10 ist in der Mitte zwischen den Lagerbolzen 14, aber exzentrisch im Bereich einer weiteren Ecke des Dreiecks, eine weitere Lasche 18 vorgesehen, an der über einen Bolzen 20 eine Antriebseinheit 22 angelenkt ist. Die schräg ausgerichtete und an der Sitzschale 5 befestigte Antriebseinheit 22 umfaßt eine linear verschiebbare Schubstange 24, die beispielsweise über eine Getriebeverbindung mittels eines Elektromotors oder manuell oder über einen Hydraulik- oder Pneumatikzylinder bewegt wird.

Der Grundträger 10 mit dem Polster 16 ist so angeordnet, daß das Polster 16 mit einer Ecke oder mit einer Seite des Dreiecks am Sitzkissen 7 anliegt. Der Grundträger 10 mit dem Polster 16 bildet den vorderen Rand des Sitzteils 3. Ein die Polsteroberfläche bildender Bezug 27 ist über die Oberseite des Sitzkissens 7 und des Polsters 16 gezogen und über den vorderen Rand herunter geführt auf die Unterseite des Grundträgers 10, wo ein Gummiband 29 als elastisches Ausgleichselement am Bezug 27 angebracht ist. Das Gummiband 29 ist an einer Querstange 31 angebracht, die quer zum Fahrzeugsitz 1 verläuft und an den Haltern 9 befestigt ist. Die Querstange 31 kann so ausgebildet sein, daß sie mittels der Antriebseinheit 22 entlang den Haltern 9 verschiebbar ist. Zumindest die Unterseite des Bezugs 27 und die Oberseite des Polsters 16 sind aus einem Materialpaar mit geringer Reibung ausgebildet, beispielsweise Flies und Leder.

Bei der geringsten Sitztiefe ist der Grundträger 10 mit dem Polster 16 so eingestellt, daß eine Ecke des Dreiecks nach oben zeigt. Zur Veränderung der Sitztiefe bewegt die Antriebseinheit 22 ihre Schubstange 24 linear in deren Längsrichtung, wodurch eine auf den Bolzen 20 wirkende, von einer leichten Schwenkbewegung überlagerte Verschiebung des vorderen Teils der Antriebseinheit 22 nach vorne entsteht. Über den exzentrisch zu den Lagerbolzen 14 angeordneten Bolzen 20 wird der Grundträger 10 bewegt, wobei er eine Drehbewegung um die Lagerbolzen 14 ausführt. Dadurch schiebt sich die Seite des Dreiecks hinter der bislang nach oben weisenden Ecke langsam nach oben. Bei der Bewegung wird auf den Bezug 27 über die Reibung eine Scherspannung und über die sich vergrößernde Oberfläche eine Zugspannung ausgeübt. Zum Ausgleich für das letztere dehnt sich das Gummiband 29. Gegebenenfalls wird zusätzlich die Querstange 31 bewegt. Bei der größten Sitztiefe ist der Grundträger 10 mit dem Polster 16 so eingestellt, daß die in Rede stehende Ecke des Dreiecks nach vorne und die daran anschließende Seite nahezu nach oben zeigt. In der umgekehrten Einstellrichtung sorgt das Gummiband 29 für die nötige Spannung im Bezug 27.

## Patentansprüche

1. Sitztiefeneinstellvorrichtung für einen Fahrzeugsitz, insbesondere für einen Kraftfahrzeugsitz, mit einem hinteren Polsterteil (7), einem vorderen Posterteil (16), welches zur Einstellung der Sitztiefe des Fahrzeugsitzes (1) relativ zum hinteren Polsterteil (7) drehbar ist, und einem gemeinsamen, eine durchgehende Polsteroberfläche bildenden Bezug (27), welcher das vordere Polsterteil (16) und das hintere Polsterteil (7), die getrennt voneinander ausgebildet sind, überzieht, **dadurch gekennzeichnet, daß** das vordere Polsterteil (16) auf einem profilierten Grundträger (10) mit im wesentlichen dreieckigen Querschnitt angeordnet ist, welcher an einer Ecke gelagert ist, wobei im Bereich einer weiteren Ecke des Grundträgers (10) eine Antriebseinheit (22) mit längsverschiebbarer Schubstange (24) angelenkt ist, und wobei bei der geringsten Sitztiefe eine Ecke und bei der größter Sitztiefe eine Seite des im wesentlichen dreieckigen Grundträgers (10) nach oben zum Bezugh in weist.

2. Sitztiefeneinstellvorrichtung nach Anspruch 1, **dadurch gekennzeichnet, daß** zwischen dem Bezug (27) und dem vorderen Polsterteil (16) ein Materialpaar mit geringer Reibung vorgesehen ist.

3. Sitztiefeneinstellvorrichtung nach einem der Ansprüche 1 bis 2, **dadurch gekennzeichnet, daß** ein elastisches Ausgleichselement (29) zum Spannen des Bezugs (27) vorgesehen ist.

4. Fahrzeugsitz, insbesondere Kraftfahrzeugsitz, mit einstellbarer Sitztiefe, **gekennzeichnet durch** eine Sitztiefeneinstellvorrichtung nach einem der Ansprüche 1 bis 3.

## Claims

1. Seat depth adjustment device for a vehicle seat, in particular for a motor vehicle seat, having a rear upholstered member (7), a front upholstered member (16) which can be rotated relative to the rear upholstered member (7) in order to adjust the seat depth of the vehicle seat (1), and a common cover (27) which forms a continuous upholstered surface and which covers the front upholstered member (16) and the rear upholstered member (7), which are constructed separately from each other, **characterised in that** the front upholstered member (16) is arranged on a shaped base carrier (10) which has a substantially triangular cross-section and which is arranged at a corner, a drive unit (22) having a longitudinally displaceable pushing rod (24) being articulated in the region of another corner of the base carrier (10), and, at the lowest seat depth, a corner of the substantially triangular base carrier (10) being directed upwards towards the cover, and, at the highest seat depth, a side of the substantially triangular base carrier (10) being directed upwards towards the cover.

2. Seat depth adjustment device according to claim 1, **characterised in that** a low-friction material pair is provided between the cover (27) and the front upholstered member (16).

3. Seat depth adjustment device according to either claim 1 or claim 2, **characterised in that** a resilient compensation element (29) is provided in order to tension the cover (27).

4. Vehicle seat, in particular a motor vehicle seat, having adjustable seat depth, **characterised by** a seat depth adjustment device according to any one of claims 1 to 3.

## Revendications

1. Dispositif de réglage de la profondeur d'assise pour un siège de véhicule, en particulier pour un siège de véhicule automobile, qui comprend une partie arrière de capitonnage (7), une partie avant de capitonnage (16) que l'on peut faire tourner par rapport à la partie arrière de capitonnage (7) pour régler la profondeur d'assise du siège de véhicule (1), et un revêtement commun (27) formant une surface de capitonnage ininterrompue et recouvrant la partie avant de capitonnage (16) et la partie arrière de capitonnage (7) qui sont réalisées séparément l'une de l'autre, **caractérisé par le fait que** la partie avant de capitonnage (16) est agencée sur un support de base profilé (10) possédant une section sensiblement triangulaire, lequel support est tourillonné à un angle, une unité d'entraînement (22) qui possède une bielle (24) mobile en translation longitudinale étant articulée dans la région d'un autre angle du support de base (10), et un angle du support de base (10) sensiblement triangulaire pointant vers le haut, en direction du revêtement, pour la profondeur d'assise minimale et un côté pour la profondeur d'assise maximale.

2. Dispositif de réglage de la profondeur d'assise selon la revendication 1, **caractérisé par le fait que** une paire de matières à faible frottement est prévue entre le revêtement (27) et la partie avant de capitonnage (16).

3. Dispositif de réglage de la profondeur d'assise selon l'une des revendications 1 et 2, **caractérisé par le fait qu'**un élément de compensation élastique (29) est prévu pour tendre le revêtement (27).

4. Siège de véhicule, en particulier siège de véhicule automobile, possédant une profondeur d'assise réglable, **caractérisé par** un dispositif de réglage de la profondeur d'assise tel que défini à l'une des revendications 1 à 3.
